# EUROPEAN PATENT APPLICATION

(11) **EP 2 530 357 A1**
(43) Date of publication of application: **05.12.2012**
(21) Application number: 12168222.3
(22) Date of filing: 16.05.2012
(51) Int. Cl.: F16H 7/18

(54) **Method for the guidance of the drive chain to the chain wheel and the guidance means**

(30) Priority: 02.06.2011 CZ 20110330
(71) Applicant: VÚTS, a.s., 461 19 Liberec (CZ)
(72) Inventor: Koloc, Zdenek, 46001 Liberec (CZ); Korf, Jaroslav, 41801 Bílina (CZ); Kavan, Pavel, 46001 Liberec (CZ)
(74) Representative: Musil, Dobroslav

(57) **Abstract**

The invention relates to the method for the guidance of the drive chain (2) to a chain wheel (1), wherein the chain (2), before being guided to the chain wheel (1) teeth, is deflected outwards from its travel to a distance bigger than the radius (rk) of the pitch circle (11) of the teeth of the chain wheel (1), afterwards is guided into gearing along a travel in the shape of a continuous curve. The continuous curve fluently concurs with the travel of the chain (2) determined by the teeth of the chain wheel (1), whereas during the deflection the chain (2) is supported by a guidance means (3, 4) until guidance to the chain wheel (1) teeth.

The invention also relates to a guidance means (3, 4) for the guidance of a drive chain (2) to a chain wheel (1) arranged before the contact of the chain (2) with the chain wheel (1) in a chain transmission. This guidance means (3, 4) includes a guiding surface (312, 411) for the deflection of the chain (2) outwards from the teeth of the chain wheel (1) and a guidance surface (313, 413) for the fluent guidance of the chain (2) to the teeth of the chain wheel (1).

## Description

### Technical field

The invention relates to a method for the guidance of a drive chain to a chain wheel.

The invention also relates to a guidance means for the guidance of a drive chain to a chain wheel arranged before the contact of the chain with the chain wheel in a chain transmission.

### Background art

Chain transmissions are machinery that is often utilized with manufacturing devices, light-weight means of transport and others. In the segment of transmissions, roller chains are most commonly used, being especially utilized with drives with high transmission loading and high velocity. The contact of the chain wheel tooth is performed through rollers pivoted in firm inner link bushings. The negative feature of the operation of a chain transmission or drive is the gearing inherent to the chain and the chain wheel, at which a contact of the roller of the chain with the chain wheel tooth occurs. There, between the roller and the tooth, a shock occurs, usually resulting in the oscillation of the chain in the area prior to its contact with the teeth as well as in the irregularity of the gear ratio. Another serious problem is involved here, comprising of the fact that the virtually rectilinear motion of the chain before the chain wheel is changed to an annular motion at the moment of the contact, resulting in the occurrence and spontaneous increment of the centripetal acceleration of the elements of the chain.

The solution according to JP 09049555 A uses a C-shaped plate floating guide arranged coaxially with the chain wheel close to it. The radius of the outer guiding semi-arch is approximately the same as the radius of the bottom circle of the chain wheel and the guide continues with mutually parallel tangential sections before and after the chain wheel. This solution reduces the oscillation of the link when fitting into the gullet, but does not remove the actual cause of the oscillation.

The chain guided between two coupled chain wheels in its entire travel is known from JP 2004232667 A. The mutual distance of parallel chain branches on which the chain is guided to and from the wheel is smaller than the pitch circle of the wheel, the chain being guided in a travel of a sigmoidal shape on both sides when close to the wheel. However, such guiding reduces the efficiency of the gear.

JP 09079333 A proposes an arrangement of the guiding surface preventing the self-weight chain sag before the gearing of the roller with the chain wheel tooth. The issue of dynamic oscillation of the chain and thus the problem of the fit of the chain rollers into the gullet remains unresolved.

JP 2003158452 A resolves the gearing of the chain with the chain wheel to a comparatively satisfactory extent. The chain guide is created as a floating eccentric with a guiding surface depending on its circumferential circle, or the guiding surface continues in the direction of away from the wheel at the point of the beginning and the end of the gearing, basically in the tangential direction. The distance of the guiding surface of the guide from the axis of the chain wheel in the area where the chain roller enters into a gearing with the chain wheel tooth is principally the same as the radius of the bottom circle. The position of a running chain is basically constant at the point of the gearing.

However, as the deficiency of the prior art the problem of the discontinuity of the radial velocity of the chain, or the centripetal acceleration respectively, at the moment of the gearing of the chain roller with the teeth causing an immediate increase of the centripetal acceleration applied on the parts of the chain remains unsolved.

The goal of the invention is thus the removal or at least the significant reduction of the deficiencies of the prior art by means of suppressing the steep increment of the centripetal acceleration of the chain.

### Principle of the invention

The goal of the invention is achieved by a method of guidance of a drive chain (2) to a chain wheel, whose principle consists in that, the chain is before its guidance to the chain wheel teeth deflected outwards from its travel to a distance bigger than the radius of the pitch circle of the chain wheel teeth, whereupon is guided into a gearing along a travel in the shape of a continuous curve connected fluently to the travel of the chain determined by the chain wheel teeth, whereas during the deflecting the chain is supported by the guidance means until guidance to the chain wheel teeth.

The chain elements thus enter into gearing with the chain wheel teeth along a curvilinear travel which is similar to the radius of the chain wheel, which prevents the occurrence of a spontaneous increment of centripetal acceleration of the chain parts at the moment of the contact of the chain and the wheel, which has a positive impact on the gearing fluency, the shocks between the chain and chain wheel are significantly reduced.

In the area of the biggest deflection, the chain travel is linear which simplifies the manufacturing of the guidance device compared to the possibly curved shape of the guiding surface.

The guidance means supports the narrow surfaces of the inner connecting plates of the chain. That allows to support the chain on its both sides.

It is possible to support the roller elements of the chain by through the guidance means in an alternative way. That reduces the width of the actual guidance device.

The goal of the invention also includes a guidance means for the guidance of the drive chain to the chain wheel, the principle of which is based on the fact that there is a guiding surface included for the deflection of the chain outwards from the chain wheel teeth as well as a guidance surface for the fluent guidance of the chain to the chain wheel teeth, allowing the performance of the guidance method according to claims 1 to 4.

The guiding surface and the guidance surface are connected continuously, which is a precondition for the continuous fluent increment of the centripetal acceleration applied to the chain.

Before the passage into the guidance surface, the guiding surface includes a linear part, which is advantageous from the point of view of the manufacturing technology of the guidance device.

The guiding device and/or the guidance device are modified for the purpose of the contact with the inner connecting plates of the chain. The guidance means is rigid, whereas both sides of the chain are supported.

For the reason of narrowing the guidance means it is of particular advantage to modify the guiding surface and/or the guidance surface for the purpose of the contact with the roller elements of the chain. However, the length of the roller elements of the chain between the inner connecting plates has to be bigger than the width of the chain wheel teeth to allow the support of the chain by means of the guidance means at least until the moment of the contact of the roller element with the respective tooth of the chain wheel.

Resulting from the guidance device eliminating the spontaneous increment of the centripetal acceleration of the chain parts and thus significantly reducing the shocks between the chain and the chain wheel, besides the reduced wear of the chain and the chain wheel, the operational noise rate of the chain gear is also reduced.

### Description of the drawing

The exemplary embodiments according to the invention are schematically represented in the drawing, where Fig. 1a is a side view of the chain wheel and the guidance means, Fig. 1b is a plan view of a roller chain, Fig. 2a is a side view of a roller chain guided through inner plates, Fig. 2b is a plan view of Fig. 2a, Fig. 3a is a side view of a roller chain guided through a surface of roller elements and Fig. 3b is a plan view of Fig. 3a.

### Examples of embodiment

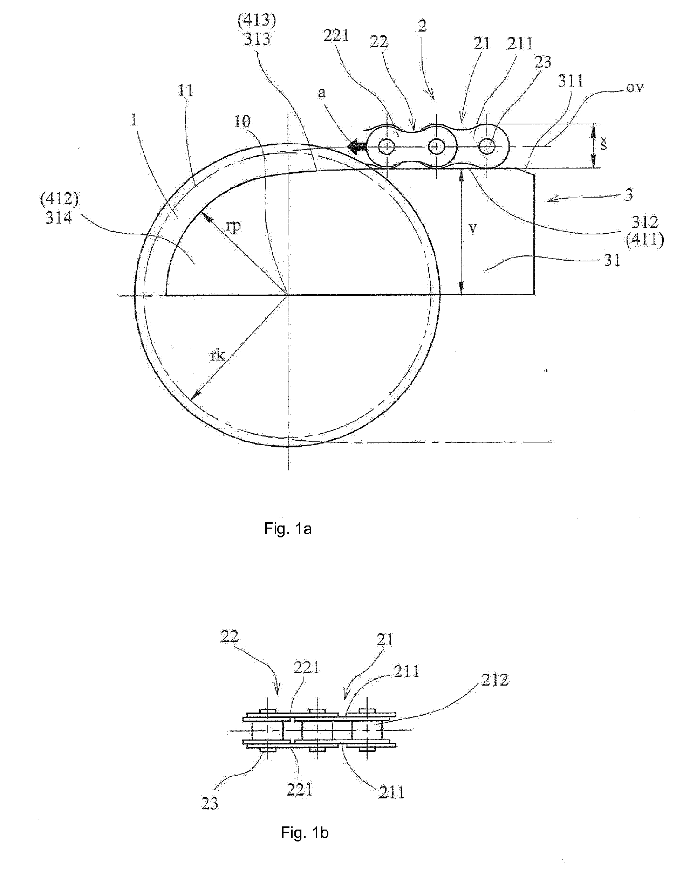

In Fig. 1a the chain wheel **1** with the roller chain **2** is represented, the plan view of which is represented in Fig. 1b. The roller chain is composed of inner links **21** and of outer links **22** in a way understood by one of ordinary skill in the art. The inner link **21** includes two inner connecting plates **211,** firmly interconnected by means of bushings that are not represented, the roller elements **212** are pivoted on them. The outer link **22** includes two outer connecting plates **221** adjoined to the inner connecting plates **211** of the inner links **21** on the outside. The inner and outer links **21, 22** are interconnected by means of link pins **23,** passing through the bushings with no restraint to their rotary motion, whereas the pins **23** are firmly connected to the outer connecting plates **221.** The width 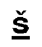 of the inner connecting plates **211** is bigger than the width of the outer connecting plates **221**.

The chain wheel **1** has an ordinary symmetrical profile of teeth allowing the two-way motion of the chain **2** by itself.

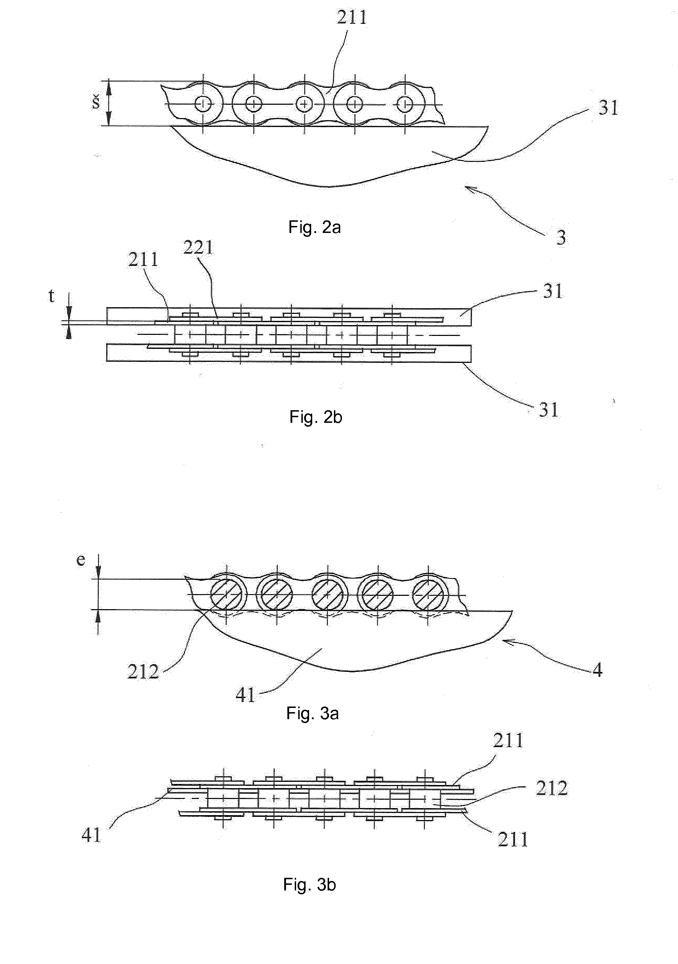

The chain gear is provided with a guidance means **3** according to the invention, which in the exemplary embodiment according to Fig. 1a, 2a, 2b includes two identical shaped plates **31** fixed in the same position on both sides of the chain wheel **1** close to it. By a part of the curved circumference of the plates is positioned near to the feed branch, being the upper chain branch **2** here. The initial part of the circumference of the shaped plate **31** in direction **a** of the motion of the chain **2** makes a slant lead-in surface **311** followed by the guiding surface **312.** In this exemplary embodiment it is linear, its geometrical distance **v** from the axis **10** of the rotation of the chain wheel **1** is bigger than the difference of the radius **rk** of the pitch circle **11** of the teeth of the chain wheel **1** and the half of the width 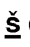 of the inner connecting plate **211** of the chain **2.**

The linear guiding surface **312** is then followed by the guidance surface **313,** the outline of which is a continuous convex curve with a fluently decreasing radius of curvature in the direction of away from the guiding part **312.**

The end part of the shaped plate **31** has an outline of a circular segment **314,** the axis of which is identical to the axis **10** of the chain wheel **1.** At least in the vicinity of the guidance surface **313** the radius **rp** of the circular segment **314** is determined by the difference of the radius **rk** of the pitch circle **11** of the teeth of the chain wheel **1** and the half of the width 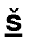 of the inner connecting plate **211,** fluently following the end of the guidance surface **313** and possibly decreasing to a value below the radius of the bottom circle of the chain wheel **1**, which is not represented.

The width of the shaped plates **31** is bigger than the thickness of the inner connecting plate **211;** from the point of view of its rigidity it is particularly advantageous, if the thickness of the shaped plate **31** is equal to a multiplicity of the inner connecting plate **211.**

In view of the torsional rigidity of the chain, it is obvious that only one shaped plate **31** can be arranged as the guidance means.

Fig. 3a, 3b represents another embodiment of the guiding means **4,** including one shaped plate **41,** arranged between the inner connecting plates **211** in the vicinity of one of their rows, its outline is in contact with the roller elements **212.** The width of the chain wheel is smaller than the one that would correspond to the difference of the length of the roller element **212** and the thickness of the inner connecting plate **211.**

The outline of the shaped plate **41** is similar to the outline of the shaped plate **31.** The difference rests in the fact that the distance **v** of the linear guiding surface **411** of the initial part of the shaped plate **41** is bigger than the difference of the radius **rk** of the pitch circle **11** of the teeth of the chain wheel **1** and the half of the diameter **e** of the roller element **212.** The radius **rp** of the circular segment **412** of the shaped plate **41** is determined by the difference of the radius of the pitch circle **11** of the teeth of the chain wheel 1 and the radius of the roller element **212**. The outline of the shaped plate **41** between the guiding surface **411** and the outline of the circular segment **412** has a shape of a continuous convex curve fluently following the direct guiding surface **411** and the outline of the circular segment **412** with its ends. Similar to the embodiment mentioned above, there can be a further decrease to the radius **rp** onward from the guidance surface **413** to reach a value below the bottom circle of the chain wheel **1,** which is not represented. The continuous curve of the guidance surface **413** is arranged in a way analogous to the continuous curve of the guidance surface **313** of the exemplary embodiment mentioned above.

It is of particular advantage, if the difference of the distance of the longitudinal axis **ov** of the branch of the chain **2** guided on the linear guiding surface **312, 411** of the initial part of the shaped plate **31, 41** from axis **10** of the rotation of the chain wheel **1** and the radius of the pitch circle **11** of the teeth of the chain wheel **1** is within the range of 102 to 104 % of the radius **rk** of the pitch circle **11** of the teeth of the chain wheel **1**. That allows the creation of a continuous curve of the guidance surface **313, 413** connecting the guiding surface **312, 411** and the outline of the circular segment **314, 412** of the shaped plates **31, 41** so that the guiding surface **312, 411,** the guidance surface **313, 413** and the outline of the circular segment **314, 412** are suitably concurrent.

In a non-represented embodiment, the linear guiding surface **312, 411** and the slant lead-in surface **311** and the guidance surface **313, 413** connected to it is replaced by a single continuous convex curve with a big splay radius or by another curve. It is arranged so that the linear guiding surface **312, 411** of the represented embodiments would be a tangent to its top.

At the operation of the chain gear, the chain **2** is guided to the non-represented convex guiding surface or on the slant lead-in surface **311** to the linear guiding surface **312, 411** of the shaped plate **31, 41** in the direction of **a** before contacting the chain wheel **1.**

In the case of a shaped plate **31** or two parallel shaped plates **31,** the narrow surfaces of the inner connecting plates **211** are in contact with the guiding surfaces. At the moment when the contact surface of a pair of inner connecting plates **211** gets to the beginning of the guidance surface **313** of the shaped plate **31,** the respective elements of the chain **2** will start moving along the continuous curve of that surface in an arch starting with a big splay radius. For the purpose, those elements of the chain **2** are exposed to centripetal acceleration which is initially small. As the radius of curvature of the guiding surface **313** decreases, the centripetal acceleration fluently increases until the moment of gearing of the roller element **212** with the tooth of the chain wheel **1.**

The gearing is performed in an analogous way with the embodiment according to Fig. 3a, 3b. The only difference is that the outline of the shaped plate **41** is in contact with the surfaces of the roller elements **212.**

With another non-represented chain transmission, it is possible, for instance, to arrange two guiding devices **3** or **4** in the vicinity of a single chain wheel, being positioned mirror wise. That allows a two-way operation of the device, as each of the chain branches is coupled with one continuous curve. At the running of the chain the function of the guidance surface **313, 413** is performed by the surface, which is positioned before the chain wheel in the direction of the running of the chain.

With devices according to the invention no spontaneous increment of the centripetal acceleration of the part of the chain **2** occurs at the moment of gearing of the roller element **212** with the tooth of the chain wheel **1,** which has a positive impact of the fluency of the gearing, the shocks between the chain **2** and the chain wheel **1** are significantly reduced. That is favourable from the point of view of the life cycle of the cooperating components and the noise rate of the whole device.

### List of reference marks

1 chain wheel
10 axis of rotation of the chain wheel
11 pitch circle of the teeth of the chain wheel
2 chain
21 inner chain link
211 inner connecting plate (of the inner chain link)
212 roller element
22 outer chain link
221 outer connecting plate (of the outer chain link)
23 chain pin
3 guiding means
31 shaped plate (of the guiding device)
311 slant lead-in surface (of the shaped plate 31, 41))
312 guiding surface
313 guidance surface (of the shaped plate)
314 circular segment (of the shaped plate)
4 guiding means
41 shaped plate (of the guiding device)
411 guiding surface (of the shaped plate)
412 circular segment (of the shaped plate)
413 guidance surface (of the shaped plate)
a direction (of the chain motion)
e diameter of the roller element
ov chain branch axis
rk radius of the pitch circle of the chain wheel
rp radius of the circular segment (of the shaped plate)
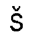 width of the inner connecting plate
t thickness of the inner connecting plate
v distance of the direct guiding surface form the axis of the chain wheel

## Claims

1. A method for guidance of a drive chain (2) to a chain wheel (1), **characterized in that,** the chain (2) is before its guidance to the chain wheel teeth deflected outwards from its travel to a distance bigger than the radius (rk) of a pitch circle (11) of the chain wheel teeth (1), whereupon is guided into gearing along a travel in a shape of a continuous curve connected fluently to the travel of the chain determined by the chain wheel (1) teeth, whereas during the deflection the chain (2) is supported by a guidance means (3, 4) until guidance to the chain wheel (1) teeth.

2. A method as defined in claim 1, **characterized in that,** the travel of the chain (2) is linear in the area of the biggest deflection.

3. A method as defined in clams 1 or 2, **characterized in that,** the narrow surfaces of the internal connecting plates (211) of the chain (2) are supported through the guidance means (3).

4. A method as defined in clams 1 or 2, **characterized in that,** the roller elements (212) of the chain (2) are supported through the guidance means (4).

5. The guidance device (3, 4) for the guidance of the drive chain (2) to the chain wheel (1) arranged in a chain transmission before the contact of the chain (2) with the chain wheel (1), **characterized in that,** the guidance device (3, 4) includes a guiding surface (312, 411) for the deflection of the chain (2) outwards from the teeth of the chain wheel (1) and a guidance surface (313, 413) for a fluent guidance of the chain (2) to the teeth of the chain wheel (1).

6. A guidance device (3, 4) as defined in claim 5, **characterized in that,** the guiding surface (312, 411) and the guidance surface (313, 413) are connected continuously.

7. A guidance device (3, 4) as defined in claim 6, **characterized in that,** the guiding surface (312, 411) includes a linear part positioned before the passage to the guidance surface (313, 413).

8. A guidance device (3) as defined in any of the claims 5 to 7, **characterized in that,** the guiding surface (312) and/or the guidance surface (313) are modified for the contact with the inner connecting plates (211) of the chain (2).

9. A guidance device (4) as defined in any of the claims 5 to 7, **characterized in that,** the guiding surface (411) and/or the guidance surface (413) are modified for the contact with the inner connecting plates (212) of the chain (2).
